(19) Europäisches Patentamt
European Patent Office
Office européen des brevets

(11) EP 4 742 350 A1

(12) # EUROPEAN PATENT APPLICATION

(43) Date of publication:
**13.05.2026 Bulletin 2026/20**

(21) Application number: **25209286.1**

(22) Date of filing: **16.10.2025**

(51) International Patent Classification (IPC):
***H01M 10/0525** (2010.01)* ***H01M 10/0567** (2010.01)*

(52) Cooperative Patent Classification (CPC):
**H01M 10/0567; H01M 10/052; H01M 10/0569;**
H01M 2300/0037

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: **18.10.2024 KR 20240142973**

(71) Applicants:
- **SK On Co., Ltd.**
  **Seoul 03161 (KR)**
- **SK Innovation Co., Ltd.**
  **Seoul 03188 (KR)**

(72) Inventors:
- **LEE, Min Hee**
  **34124 Daejeon (KR)**
- **PARK, Ki Sung**
  **34124 Daejeon (KR)**
- **KIM, Jong Chan**
  **34124 Daejeon (KR)**
- **CHO, In Haeng**
  **34124 Daejeon (KR)**

(74) Representative: **Prüfer & Partner mbB**
**Patentanwälte · Rechtsanwälte**
**Sohnckestraße 12**
**81479 München (DE)**

(54) **ELECTROLYTE FOR LITHIUM SECONDARY BATTERY AND LITHIUM SECONDARY BATTERY INCLUDING THE SAME**

(57) An embodiment of the present disclosure provides an electrolyte for a lithium secondary battery and a lithium secondary battery including the same. According to some embodiments, the electrolyte for a lithium secondary battery may include an additive including a compound having a specific structure, an organic solvent and a lithium salt. Accordingly, a lithium secondary battery including the electrolyte for a lithium secondary battery may exhibit improved cycle life characteristics and high-temperature storage characteristics.

[FIG. 1]

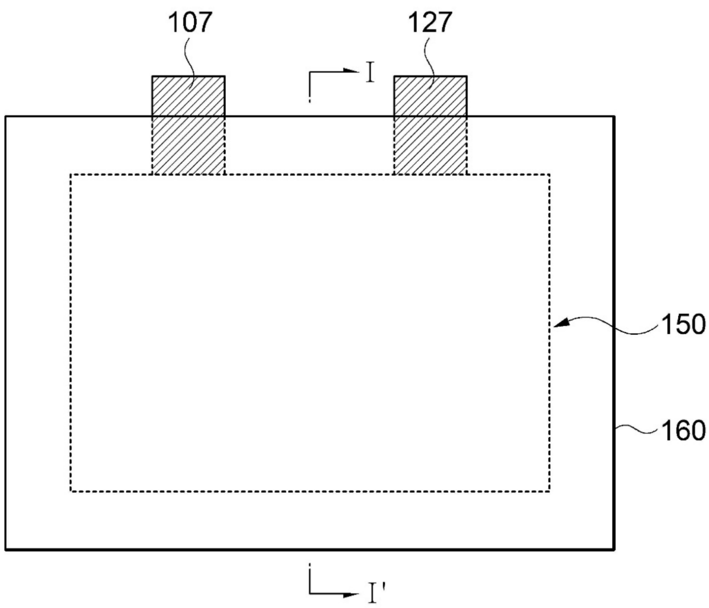


EP 4 742 350 A1

## Description

BACKGROUND

1. Field of the Invention

The present disclosure relates to an electrolyte for a lithium secondary battery and a lithium secondary battery including the same. More specifically, the present disclosure relates to an electrolyte for a lithium secondary battery including a solvent and an electrolyte salt, and a lithium secondary battery including the electrolyte.

2. Description of the Related Art

Secondary batteries are batteries that can be repeatedly charged and discharged, and have been widely applied as power sources for portable electronic devices, such as mobile phones and laptop PCs.
Among secondary batteries, a lithium secondary battery has a high operating voltage and a high energy density per unit weight, making it advantageous in terms of charging speed and weight reduction. In this regard, the lithium secondary battery has been actively developed and applied in various industrial fields.
A lithium secondary battery may include, for example, an electrode assembly including a cathode, an anode and a separation membrane interposed between the cathode and the anode, and an electrolyte in which the electrode assembly is impregnated.
The lithium secondary battery may further include, for example, an outer case in the form of a pouch for accommodating the electrode assembly and the electrolyte.
The cathode of a lithium secondary battery may be fabricated by, for example, applying a cathode slurry including a cathode active material, a binder, and, optionally, a conductive material, to a cathode current collector, followed by drying and roll-pressing.
The cathode active material may be a material capable of reversible intercalation and deintercalation of lithium ions. For example, the cathode active material may be a lithium metal oxide including a metal element such as nickel (Ni), cobalt (Co) or manganese (Mn).
When a lithium secondary battery is repeatedly charged and discharged, side reactions between the lithium metal oxide and the electrolyte may occur, thereby degrading the stability and cycle life characteristics of the lithium secondary battery.
Meanwhile, as the application range of lithium secondary batteries continues to expand, superior cycle life characteristics, high capacity, and operational stability are increasingly required. Accordingly, there is a need to develop a lithium secondary battery that provides consistent output and capacity even during repeated charge and discharge cycles.

SUMMARY

An object of the present disclosure is to provide an electrolyte for a lithium secondary battery having improved chemical stability.
Another object of the present disclosure is to provide a lithium secondary battery having improved cycle life characteristics and high-temperature storage characteristics.
An electrolyte for a lithium secondary battery according to exemplary embodiments may include: an additive including a compound having a structure represented by Formula 1 below; an organic solvent; and a lithium salt.

[Formula 1]

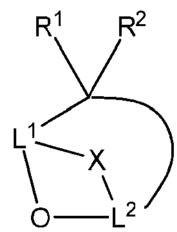

In Formula 1, $R^1$ and $R^2$ may form a carbonyl group together with the carbon atom to which they are bonded, or $R^1$ and $R^2$ may be linked to the carbon atom to which they are bonded to form a 4- to 7-membered heterocycloalkyl group including at least one oxygen atom, the heterocycloalkyl group may be unsubstituted or substituted with at least one

hydrogen atom replaced by an alkyl group having 1 to 4 carbon atoms, $L^1$ and $L^2$ may each independently be an alkylene group having 1 to 5 carbon atoms, and X may be an oxygen atom or an alkoxylene group having 1 to 3 carbon atoms.

In some embodiments, $R^1$ and $R^2$ may form a carbonyl group together with the carbon atom to which they are bonded, or $R^1$ and $R^2$ may be linked to the carbon atom to which they are bonded to form a 5- or 6-membered heterocycloalkyl group including at least one oxygen atom, the heterocycloalkyl group may be unsubstituted or substituted with at least one hydrogen atom replaced by an alkyl group having 1 to 3 carbon atoms, $L^1$ and $L^2$ may each independently be an alkylene group having 1 to 4 carbon atoms, and X may be an oxygen atom, a methoxylene group, or an ethoxylene group.

In some embodiments, $R^1$ and $R^2$ may form a carbonyl group together with the carbon atom to which they are bonded, or $R^1$ and $R^2$ may be linked to the carbon atom to which they are bonded to form 1,3-dioxolane, the 1,3-dioxolane may be unsubstituted or substituted with at least one hydrogen atom replaced by a methyl group or an ethyl group, $L^1$ and $L^2$ may each independently be an alkylene group having 1 to 4 carbon atoms, and X may be an oxygen atom.

In some embodiments, the compound having the structure represented by Formula 1 may include a compound having a structure represented by any one of Formula 2-1 to Formula 2-5 below.

[Formula 2-1]

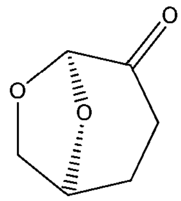

[Formula 2-2]

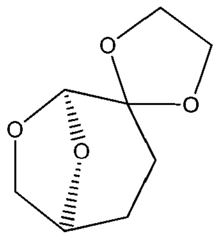

[Formula 2-3]

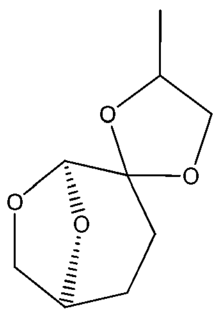

[Formula 2-4]

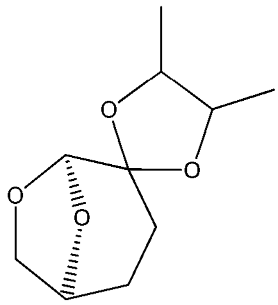

[Formula 2-5]

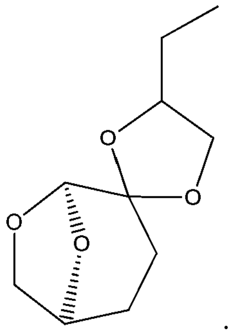

In some embodiments, the organic solvent may include at least one selected from the group consisting of a carbonate organic solvent, an ester organic solvent, an ether organic solvent, a ketone organic solvent, and an aprotic organic solvent.

In some embodiments, the organic solvent may include a cyclic carbonate solvent and a linear carbonate solvent.

In some embodiments, the ratio of the volume of the cyclic carbonate solvent to the volume of the linear carbonate solvent in the organic solvent may be 1/9 to 1.

In some embodiments, the content of the additive may be 0.1% by weight to 10% by weight based on the total weight of the electrolyte.

In some embodiments, the content of the additive may be 0.1% by weight to 3% by weight based on the total weight of the electrolyte.

In some embodiments, the lithium salt may include at least one selected from the group consisting of $LiPF_6$, $LiClO_4$, $LiBF_4$, LiFSI, LiTFSI, LiBOB, LiFOB, LiDFOB, LiDFBP, LiTFOP, $LiPO_2F_2$, LiCl, LiBr, LiI, $LiB_{10}Cl_{10}$, $LiCF_3SO_3$, $LiCF_3CO_2$, $LiAsF_6$, $LiSbF_6$, $LiAlCl_4$, $CH_3SO_3Li$, $CF_3SO_3Li$, LiSCN, and $LiC(CF_3SO_2)_3$.

In some embodiments, the electrolyte may further include at least one auxiliary additive selected from the group consisting of a fluorine-containing carbonate compound, a lithium phosphate compound, a sultone compound, and a sulfate compound.

In some embodiments, the auxiliary additive may include fluoroethylene carbonate (FEC), lithium difluorophosphate (LiDFP), 1,3-propane sultone (PS), and 1,2-ethylene sulfate (ESA).

In some embodiments, the content of the auxiliary additive may be 0.01% by weight to 10% by weight based on the total weight of the electrolyte.

In some embodiments, the weight ratio of the content of the auxiliary additive to the content of the additive in the electrolyte may be 0.1 to 15.

A lithium secondary battery according to exemplary embodiments may include: an electrode assembly including a cathode and an anode that are repeatedly stacked; and the electrolyte for a lithium secondary battery, which impregnates the electrode assembly.

The electrolyte for a lithium secondary battery according to exemplary embodiments may form a uniform and highly ionic-conductive solid electrolyte interphase (SEI) on the electrode surface.

The lithium secondary battery according to exemplary embodiments may include the electrolyte for a lithium secondary battery, thereby exhibiting improved cycle life characteristics and high-temperature storage characteristics.

The electrolyte may be widely applied in green technology fields, such as electric vehicles, battery charging stations, as well as solar power generation, wind power generation, and the like, which use the batteries. In addition, the

lithium secondary battery may be used in eco-friendly electric vehicles, hybrid vehicles, and the like, which are aimed at mitigating climate change by reducing air pollution and greenhouse gas emissions.

[BRIEF DESCRIPTION OF THE DRAWINGS]

The above and other objects, features and other advantages of the present disclosure will be more clearly understood from the following detailed description taken in conjunction with the accompanying drawings, in which:

FIG. 1 is a schematic plan view of a lithium secondary battery according to exemplary embodiments; and
FIG. 2 is a schematic cross-sectional view of a lithium secondary battery according to exemplary embodiments.

DETAILED DESCRIPTION

An electrolyte for a lithium secondary battery according to exemplary embodiments may include an additive including a compound having a specific structure, an organic solvent and a lithium salt.
A lithium secondary battery according to exemplary embodiments may include: an electrode assembly including repeatedly stacked cathodes and anodes; and the electrolyte for a lithium secondary battery that impregnates the electrode assembly.
As used herein, the "X compound" may refer to a compound including an X unit attached to a matrix, or a derivative of the X compound.
Hereinafter, the embodiments of the present disclosure will be described in detail. However, the embodiments are merely illustrative, and the present disclosure is not limited to the specific embodiments described as examples.

<**Electrolyte for a lithium secondary battery**>

The electrolyte for a lithium secondary battery according to exemplary embodiments (hereinafter, also abbreviated as "electrolyte") may include an additive including a compound having a structure represented by Formula 1 below, an organic solvent and a lithium salt.
Hereinafter, the components of the present disclosure will be described in more detail.

**Additive**

The electrolyte for a lithium secondary battery according to some embodiments may include an additive including a compound having a structure represented by Formula 1 below.

[Formula 1]

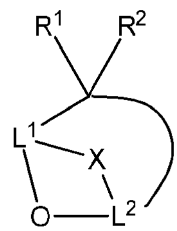

In Formula 1, $R^1$ and $R^2$ may form a carbonyl (C=O) group together with the carbon atom to which they are bonded, or $R^1$ and $R^2$ may be linked to the carbon atom to which they are bonded to form a 4- to 7-membered heterocycloalkyl group including at least one oxygen atom,

the heterocycloalkyl group may be unsubstituted or substituted with at least one hydrogen atom replaced by an alkyl group having 1 to 4 carbon atoms,
$L^1$ and $L^2$ may each independently be an alkylene group having 1 to 5 carbon atoms, and
X may be an oxygen atom or an alkoxylene group having 1 to 3 carbon atoms.

In one embodiment, the heterocycloalkyl group may include two oxygen atoms and may be a 5-membered heterocycloalkyl group, for example, 1,3-dioxolane.
In one embodiment, the heterocycloalkyl group may be substituted with one or two hydrogen atoms replaced by

an alkyl group having 1 to 4 carbon atoms, and the alkyl group may be unsubstituted.

In some embodiments, $R^1$ and $R^2$ may form a carbonyl group together with the carbon atom to which they are bonded, or $R^1$ and $R^2$ may be linked to the carbon atom to which they are bonded to form a 5- or 6-membered heterocycloalkyl group including at least one oxygen atom,

the heterocycloalkyl group may be unsubstituted or substituted with at least one hydrogen atom replaced by an alkyl group having 1 to 3 carbon atoms,
$L^1$ and $L^2$ may each independently be an alkylene group having 1 to 4 carbon atoms, and
X may be an oxygen atom, a methoxylene group, or an ethoxylene group.

In some embodiments, $R^1$ and $R^2$ may form a carbonyl group together with the carbon atom to which they are bonded, or $R^1$ and $R^2$ may be linked to the carbon atom to which they are bonded to form 1,3-dioxolane,

the 1,3-dioxolane may be unsubstituted or substituted with at least one hydrogen atom replaced by a methyl group or an ethyl group,
$L^1$ and $L^2$ may each independently be an alkylene group having 1 to 4 carbon atoms, and
X may be an oxygen atom.

In one embodiment, the 1,3-dioxolane may be substituted with one or two hydrogen atoms replaced by a methyl group or an ethyl group, and the methyl group or the ethyl group may be unsubstituted. For example, $R^1$ and $R^2$ may be linked to the carbon atom to which they are bonded to form 1,3-dioxolane, methyl-1,3-dioxolane, dimethyl-1,3-dioxolane, or ethyl-1,3-dioxolane.

In some embodiments, $R^1$ and $R^2$ may form a carbonyl group together with the carbon atom to which they are bonded, $L^1$ and $L^2$ may each independently be an alkylene group having 1 to 4 carbon atoms, and X may be an oxygen atom.

In some embodiments, the compound having the structure represented by Formula 1 may include a compound having a structure represented by any one of Formula 2-1 to Formula 2-5 below.

[Formula 2-1]

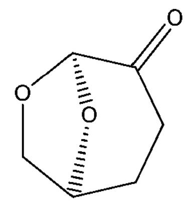

[Formula 2-2]

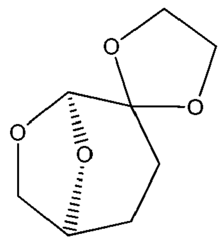

[Formula 2-3]

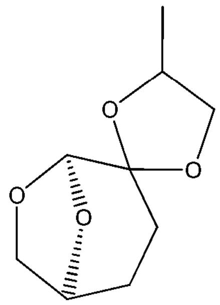

[Formula 2-4]

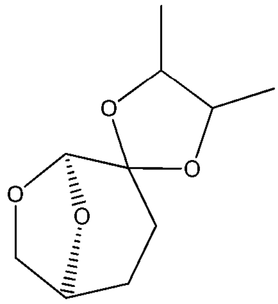

[Formula 2-5]

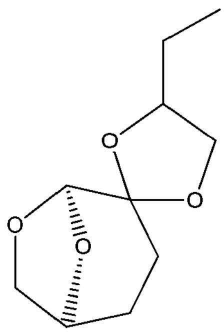

In some embodiments, the compound having the structure represented by Formula 1 may include a compound having the structure represented by any one of Formula 2-1, Formula 2-2, and Formula 2-4, and may be, for example, a compound having the structure represented by Formula 2-1.

For example, when an additive including the compound having the structure represented by Formula 1 is included in an electrolyte for a lithium secondary battery, a uniform and highly ionic-conductive solid electrolyte interphase (SEI) film may be formed on the electrode surface.

For example, a polymeric film formed by the opening of the bridged rings within the compound stably protects the electrode surface, thereby stabilizing the electrode interface and suppressing side reactions with the electrolyte.

Therefore, the lithium secondary battery may exhibit improved cycle life characteristics and suppressed thickness increase in a high-temperature environment.

In some embodiments, the content of the additive may be 0.1% by weight ("wt%") to 10 wt% based on the total weight of the electrolyte. Alternatively, in some embodiments, the content of the additive may be 0.1 wt% to 3 wt% based on the total weight of the electrolyte.

For example, the content of the additive may be 0.2 wt% to 8 wt%, 0.3 wt% to 5 wt%, 0.4 wt% to 3 wt%, 0.5 wt% to 2 wt%, 0.1 wt% to 3 wt%, 0.1 wt% to 2 wt%, or 0.1 wt% to 1 wt%, or 0.1 wt% to 0.5 wt%, based on the total weight of the electrolyte. Alternatively, the content may be 0.1 wt% or more, 0.3 wt% or more, 3 wt% or more, or 5 wt% or more, or 10 wt% or less, 5 wt% or less, 3 wt% or less, or 0.5 wt% or less.

Within the above range, a uniform and highly ion-conductive SEI film may be formed, and the migration of lithium

ions and the activity of the cathode active material may not be inhibited.

**Auxiliary additives**

In some embodiments, the electrolyte for a lithium secondary battery may further include an auxiliary additive including a cyclic carbonate compound, a fluorine-containing carbonate compound, a sultone compound, a sulfate compound, a cyclic sulfite compound, a lithium phosphate compound and a borate compound.

In some embodiments, the electrolyte may further include an auxiliary additive including a fluorine-containing carbonate compound, a lithium phosphate compound, a sultone compound and a sulfate compound.

When the above additives and the auxiliary additives are used in combination, a lithium secondary battery having improved high-temperature storage characteristics may be efficiently implemented.

For example, the cyclic carbonate compound may include vinylene carbonate (VC), and vinyl ethylene carbonate (VEC), etc.

For example, the fluorine-containing carbonate compound may include a fluorine atom or a fluorine-substituted group (e.g., a fluorine-substituted alkyl group such as $-CF_3$) bonded to at least one carbon atom of the carbonate compound.

In some embodiments, the fluorine-containing carbonate compound may include a fluorine-containing cyclic carbonate compound having a ring structure. For example, the fluorine-containing cyclic carbonate compound may have a 5- to 7-membered ring structure.

For example, the fluorine-containing cyclic carbonate compound may include fluoroethylene carbonate (FEC), etc.

In some embodiments, the lithium phosphate compound may include a fluorine-containing lithium phosphate compound.

For example, the fluorine-containing lithium phosphate compound may include a fluorine atom or a fluorine-substituted group (e.g., a fluorine-substituted alkyl group such as - $CF_3$) bonded to a phosphorus atom of the lithium phosphate compound.

In some embodiments, the fluorine-containing lithium phosphate compound may include lithium difluorophosphate ($LiPO_2F_2$), lithium difluoro bis(oxalato) phosphate and the like. For example, the fluorine-containing lithium phosphate compound may include lithium difluorophosphate ($LiPO_2F_2$).

In some embodiments, the sultone compound may include at least one selected from the group consisting of an alkyl sultone compound and an alkenyl sultone compound.

In some embodiments, the sultone compound may include both an alkyl sultone compound and an alkenyl sultone compound.

For example, the alkyl sultone compound may include 1,3-propane sultone (PS), and 1,4-butane sultone, etc.

For example, the alkenyl sultone compound may include ethene sultone, 1,3-propene sultone (PRS), 1,4-butene sultone, and 1-methyl-1,3-propene sultone, etc.

In some embodiments, the sulfate compound may include a cyclic sulfate compound having a ring structure. The cyclic sulfate compound may have a 5- to 7-membered ring structure.

For example, the cyclic sulfate compound may include 1,2-ethylene sulfate (ESA), trimethylene sulfate (TMS), 1,2-propylene sulfate, and methyltrimethylene sulfate (MTMS), etc.

For example, the cyclic sulfite compound may include ethylene sulfite, and butylene sulfite, etc.

For example, the borate compound may include lithium bis(oxalate) borate, etc.

In one embodiment, the auxiliary additives may include fluoroethylene carbonate (FEC), lithium difluorophosphate (LiDFP), 1,3-propane sultone (PS), and 1,2-ethylene sulfate (ESA).

In one embodiment, the content of the auxiliary additive may be 0.01 wt% to 10 wt% based on the total weight of the electrolyte.

For example, the content of the auxiliary additive may be 0.05 wt% to 9 wt%, 0.5 wt% to 8 wt%, 0.8 wt% to 7 wt%, 1.0 wt% to 6 wt%, or 1.5 wt% to 5 wt% based on the total weight of the electrolyte. Alternatively, the content may be 0.1 wt% or more, 0.5 wt% or more, 1 wt% or more, or 3 wt% or less, 5 wt% or less, 3 wt% or less, 1 wt% or less, or 0.5 wt% or less.

Within the above range, the durability of the SEI may be enhanced without inhibiting the function of the additive.

In some embodiments, the weight ratio of the auxiliary additive to the weight of the additive in the electrolyte may be 0.1 to 15.

For example, the weight ratio may be 0.2 to 14, 0.3 to 13, 0.4 to 12, or 0.5 to 10. Within this range, the high-temperature storage characteristics and cycle life characteristics of the lithium secondary battery may be further improved.

In one embodiment, a fluorine-containing carbonate compound, a lithium phosphate compound, a sultone compound, and a sulfate compound may be used together as the auxiliary additive.

In some embodiments, the auxiliary additive may further include at least one selected from the group consisting of a borate compound, a nitrile compound, an amine compound, a silane compound and a benzene compound.

For example, the borate compound may include at least one selected from the group consisting of lithium tetraphenyl borate and lithium difluoro(oxalato)borate (LiODFB).

For example, the nitrile compound may include at least one selected from the group consisting of succinonitrile, adiponitrile, acetonitrile, propionitrile, butyronitrile, valeronitrile, caprylonitrile, heptanenitrile, cyclopentane carbonitrile, cyclohexane carbonitrile, 2-fluorobenzonitrile, 4-fluorobenzonitrile, difluorobenzonitrile, trifluorobenzonitrile, phenylacetonitrile, 2-fluorophenylacetonitrile and 4-fluorophenylacetonitrile.

For example, the amine compound may include at least one selected from the group consisting of triethanolamine and ethylenediamine.

For example, the silane compound may include tetravinylsilane, etc.

For example, the benzene compound may include at least one selected from the group consisting of monofluorobenzene, difluorobenzene, trifluorobenzene and tetrafluorobenzene.

## Organic solvent and lithium salt

For example, the organic solvent may include an organic compound which has sufficient solubility in the lithium salt, the additive and the auxiliary additive, and is electrochemically stable without exhibiting reactivity in the lithium secondary battery.

In some embodiments, the organic solvent may include at least one of a carbonate solvent, an ester solvent, an ether solvent, a ketone solvent, an alcohol solvent and an aprotic solvent.

In some embodiments, the organic solvent may include a carbonate solvent, and the carbonate solvent may include a linear carbonate solvent and a cyclic carbonate solvent.

For example, the linear carbonate solvent may include at least one of dimethyl carbonate (DMC), ethyl methyl carbonate (EMC), diethyl carbonate (DEC), methyl propyl carbonate, and ethyl propyl carbonate and dipropyl carbonate, etc.

For example, the cyclic carbonate solvent may include at least one of ethylene carbonate (EC), propylene carbonate (PC), and butylene carbonate, etc.

In some embodiments, the organic solvent may include a larger amount of the linear carbonate solvent than the cyclic carbonate solvent, based on the volume.

In some embodiments, the ratio of the volume of the cyclic carbonate solvent to the volume of the linear carbonate solvent in the organic solvent may be 1/9 to 1. For example, the volume ratio may be 1/9 to 1, 1/9 to 2/3, 1/6 to 2/3, or 1/4 to 2/3. Within this range, the high-temperature storage characteristics of the lithium secondary battery may be further improved.

For example, the ester solvent may be a carboxylate solvent. For example, without limitation, the ester solvent may include at least one of methyl acetate (MA), ethyl acetate (EA), n-propyl acetate (n-PA), 1,1-dimethylethyl acetate (DMEA), methyl propionate (MP), ethyl propionate (EP), gamma-butyrolactone (GBL), decanolide, valerolactone, mevalonolactone and caprolactone.

For example, the ether solvent may include at least one of dibutyl ether, tetraethylene glycol dimethyl ether (TEGDME), diethylene glycol dimethyl ether (DEGDME), dimethoxyethane, tetrahydrofuran (THF) and 2-methyltetrahydrofuran.

For example, the ketone solvent may include cyclohexanone, etc.

For example, the alcohol solvent may include at least one of ethyl alcohol and isopropyl alcohol.

For example, the aprotic solvent may include at least one of a nitrile solvent, an amide solvent (e.g., dimethylformamide), a dioxolane solvent (e.g., 1,3-dioxolane), and a sulfolane solvent.

In some embodiments, the electrolyte may include a lithium salt.

The lithium salt may be represented by $Li^+X^-$, and as an anion (X-) of the lithium salt, $F^-$, $Cl^-$, $Br^-$, $I^-$, $NO_3^-$, $N(CN)_2^-$, $BF_4^-$, $ClO_4^-$, $PF_6^-$, $(CF_3)_2PF_4^-$, $(CF_3)_3PF_3^-$, $(CF_3)_4PF_2^-$, $(CF_3)_5PF^-$, $(CF_3)_6P^-$, $CF_3SO_3^-$, $CF_3CF_2SO_3^-$, $(CF_3SO_2)_2N^-$, $(FSO_2)_2N^-$, $CF_3CF_2(CF_3)_2CO^-$, $(CF_3SO_2)_2CH^-$, $(SF_5)_3C^-$, $(CF_3SO_2)_3C^-$, $CF_3(CF_2)_7SO_3^-$, $CF_3CO_2^-$, $CH_3CO_2^-$, $SCN^-$, and $(CF_3CF_2SO_2)_2N^-$, etc. may be exemplified.

In some embodiments, the lithium salt may include at least one selected from the group consisting of $LiPF_6$, $LiClO_4$, $LiBF_4$, LiFSI, LiTFSI, LiBOB, LiFOB, LiDFOB, LiDFBP, LiTFOP, $LiPO_2F_2$, LiCl, LiBr, LiI, $LiB_{10}Cl_{10}$, $LiCF_3SO_3$, $LiCF_3CO_2$, $LiAsF_6$, $LiSbF_6$, $LiAlCl_4$, $CH_3SO_3Li$, $CF_3SO_3Li$, LiSCN and $LiC(CF_3SO_2)_3$.

In one embodiment, the lithium salt may include at least one selected from the group consisting of $LiPF_6$, LiFSI and LiTFSI.

In some embodiments, the lithium salt may be included in a concentration of 0.01 M to 5 M, 0.01 M to 4 M, 0.5 M to 3 M, or 0.5 M to 2 M based on the organic solvent. Within this concentration range, lithium ions and/or electrons may migrate smoothly during charging and discharging of the lithium secondary battery.

**<Lithium secondary battery>**

FIGS. 1 and 2 are schematic plan and cross-sectional views, respectively, illustrating a lithium secondary battery according to exemplary embodiments. FIG. 2 is a cross-sectional view taken along line I-I' of FIG. 1.

Referring to FIGS. 1 and 2, the lithium secondary battery may include an electrode assembly 150 including a cathode 100, an anode 130, and a separation membrane 140 interposed between the cathode and the anode.

For example, the electrode assembly 150 may include the cathodes 100 and the anodes 130 that are repeatedly stacked, and the electrode assembly 150 may be accommodated in a case 160 together with the above-described electrolyte according to exemplary embodiments to be impregnated.

The cathode 100 may include a cathode current collector 105 and a cathode active material layer 110 disposed on at least one surface of the cathode current collector 105.

For example, the cathode current collector 105 may include stainless steel, nickel, aluminum, titanium, or an alloy thereof. The cathode current collector may also include aluminum or stainless steel having a surface treated with carbon, nickel, titanium or silver. For example, the cathode current collector may have a thickness of 10 μm to 50 μm.

For example, the cathode active material may include a compound capable of reversibly intercalating and deintercalating lithium ions.

According to exemplary embodiments, the cathode active material may include a lithium-nickel metal oxide. The lithium-nickel metal oxide may further include at least one of cobalt (Co), manganese (Mn) and aluminum (Al).

In some embodiments, the cathode active material or the lithium-nickel metal oxide may include a layered structure or a crystal structure represented by Formula 3 below.

[Formula 3] $$Li_xNi_aM_bO_{2+z}$$

In Formula 3, x, a, b and z may satisfy $0.9 \leq x \leq 1.2$, $0.6 \leq a \leq 0.99$, $0.01 \leq b \leq 0.4$, and $-0.5 \leq z \leq 0.1$. As described above, M may include Co, Mn and/or Al.

The chemical structure represented by Formula 3 indicates a bonding relationship between elements included in the layered structure or the crystal structure of the cathode active material, and does not exclude other additional elements. For example, M includes Co and/or Mn, and Co and/or Mn may be provided as main active elements of the cathode active material together with Ni. Here, it should be understood that Formula 3 is provided to express the bonding relationship between the main active elements, and is a formula encompassing the introduction and substitution of additional elements.

In one embodiment, the cathode active material may further include auxiliary elements which are added to the main active elements, in order to enhance chemical stability thereof or the layered structure/crystal structure. The auxiliary element may be incorporated into the layered structure/crystal structure together with the main active elements to form bonds, and it should be understood that this case is also included within the chemical structure range represented by Formula 3.

The auxiliary element may include, for example, at least one of Na, Mg, Ca, Y, Ti, Hf, V, Nb, Ta, Cr, Mo, W, Fe, Cu, Ag, Zn, B, Al, Ga, C, Si, Sn, Sr, Ba, Ra, P and Zr. The auxiliary element may serve as an auxiliary active element which contributes to the capacity/output activity of the cathode active material together with Co or Mn, such as Al.

For example, the cathode active material or the lithium-nickel metal oxide may include a layered structure or a crystal structure represented by Formula 3-1 below.

[Formula 3-1] $$Li_xNi_aM1_{b1}M2_{b2}O_{2+z}$$

In Formula 3-1, M1 may include Co, Mn and/or Al. M2 may include the above-described auxiliary elements. In Formula 3-1, x, a, b1, b2 and z may satisfy $0.9 \leq x \leq 1.2$, $0.6 \leq a \leq 0.99$, $0.01 \leq b1+b2 \leq 0.4$, and $-0.5 \leq z \leq 0.1$.

The cathode active material may further include a coating element or a doping element. For example, elements which are substantially the same as or similar to the above-described auxiliary elements may be used as the coating element or the doping element. For example, the above-described elements may be used alone or in combination of two or more thereof as the coating element or the doping element.

The coating element or the doping element may exist on the surface of the lithium-nickel metal oxide particles, or may penetrate through the surface of the lithium-nickel metal composite oxide particles to be incorporated into the bonding structure represented by Formula 3 or Formula 3-1 above.

The cathode active material may include a nickel-cobalt-manganese (NCM)-based lithium oxide. In this case, an NCM-based lithium oxide with an increased content of nickel may be used.

Nickel (Ni) may be provided as a transition metal associated with the output and capacity of the lithium secondary battery. Therefore, as described above, by employing a high-nickel-content (high-Ni) composition in the cathode active material, a high-capacity cathode and a high-capacity lithium secondary battery may be provided.

In this regard, as the content of Ni increases, long-term storage stability and cycle life stability of the cathode or the secondary battery may be relatively reduced, and side reactions with the electrolyte may also increase. However, according to exemplary embodiments, by including Co, the cycle life stability and capacity retention characteristics may be improved through Mn while maintaining electrical conductivity.

The content of Ni (e.g., the molar fraction of nickel based on the total molar amount of nickel, cobalt and manganese) in the NCM-based lithium oxide may be 0.6 or more, 0.7 or more, or 0.8 or more. In some embodiments, the content of Ni may be 0.8 to 0.95, 0.82 to 0.95, 0.83 to 0.95, 0.84 to 0.95, 0.85 to 0.95, or 0.88 to 0.95.

In some embodiments, the cathode active material may include a lithium cobalt oxide-based active material, a lithium manganese oxide-based active material, a lithium nickel oxide-based active material, or a lithium iron phosphate (LFP)-based active material (e.g., $LiFePO_4$).

In some embodiments, the cathode active material may include, for example, a manganese (Mn)-rich active material, a lithium (Li)-rich layered oxide (LLO)/over-lithiated oxide (OLO)-based active material, or a cobalt (Co)-less active material, which has a chemical structure or a crystal structure represented by Formula 4.

For example, the cathode active material may include a chemical structure or a crystal structure represented by Formula 4 below.

[Formula 4] $$p[Li_2MnO_3]\cdot(1-p)[Li_qJO_2]$$

In Formula 4, p and q may satisfy $0<p<1$, and $0.9\leq q\leq 1.2$, and J may include at least one element selected from Mn, Ni, Co, Fe, Cr, V, Cu, Zn, Ti, Al, Mg and B.

For example, the cathode active material may be dispersed in a solvent to prepare a cathode slurry. The cathode slurry may be coated on the cathode current collector 105, and then dried and roll-pressed to fabricate the cathode 100. The coating process may be performed using methods such as gravure coating, slot die coating, simultaneous multilayer die coating, imprinting, doctor blade coating, dip coating, bar coating or casting, etc., but it is not limited thereto. The cathode slurry may further include a binder, and optionally may further include a conductive material, a thickener and the like.

Non-limiting examples of solvents used in the preparation of the cathode slurry may include N-methyl-2-pyrrolidone (NMP), dimethylformamide, dimethylacetamide, N,N-dimethylaminopropylamine, ethylene oxide, tetrahydrofuran and the like.

The binder may include polyvinylidene fluoride (PVDF), poly(vinylidene fluoride-co-hexafluoropropylene), polyacrylonitrile, polymethylmethacrylate, acrylonitrile butadiene rubber (NBR), poly(butadiene) rubber (BR), styrene-butadiene rubber (SBR) and the like. In one embodiment, a PVDF-based binder may be used as the cathode binder.

The conductive material may be added to the cathode slurry layer to enhance the conductivity thereof and/or the mobility of lithium ions or electrons. For example, the conductive material may include carbon-based conductive materials such as graphite, carbon black, acetylene black, Ketjen black, graphene, carbon nanotubes, vapor-grown carbon fibers (VGCFs), and carbon fibers, and/or metal-based conductive materials, including perovskite materials, such as tin, tin oxide, titanium oxide, $LaSrCoO_3$, and $LaSrMnO_3$.

As the thickener, for example, carboxymethyl cellulose (CMC) may be used.

The anode 130 may include an anode current collector 125 and an anode active material layer 120 disposed on at least one surface of the anode current collector 125.

For example, non-limiting examples of the anode current collector 125 may include a copper foil, a nickel foil, a stainless steel foil, a titanium foil, a nickel foam, a copper foam, a polymer substrate coated with a conductive metal and the like. The anode current collector may have, for example, a thickness of 10 $\mu$m to 50 $\mu$m, but it is not limited thereto.

The anode slurry layer may include an anode active material. As the anode active material, a material capable of adsorbing and desorbing lithium ions may be used. For example, as the anode active material, carbon-based materials such as crystalline carbon, amorphous carbon, carbon composites, or carbon fibers, etc.; lithium metal; a lithium alloy; a silicon (Si)-containing material or a tin (Sn)-containing material may be used.

Examples of the amorphous carbon may include hard carbon, soft carbon, coke, mesocarbon microbead (MCMB), mesophase pitch-based carbon fiber (MPCF) or the like.

Examples of the crystalline carbon may include graphite-based carbon such as natural graphite, artificial graphite, graphitized coke, graphitized MCMB, graphitized MPCF or the like.

The lithium metal may include pure lithium metal or lithium metal having a protective layer formed thereon for suppressing dendrite growth, etc. In one embodiment, a lithium metal-containing layer deposited or coated on the anode current collector may be used as the anode active material layer. In one embodiment, a lithium thin film layer may be used as the anode active material layer.

Elements included in the lithium alloy may include aluminum, zinc, bismuth, cadmium, antimony, silicon, lead, tin, gallium or indium, etc.

The silicon-containing active material may provide further increased capacity characteristics. The silicon-containing active material may include Si, $SiO_x$ (0<x<2), a silicon-carbon composite, a metal-doped silicate, or $SiO_x$ (0<x<2). The metal may include lithium and/or magnesium.

For example, the anode active material may be dispersed in a solvent to prepare an anode slurry. The anode slurry may be coated on the anode current collector, and then dried and roll-pressed to fabricate an anode. The coating process may be performed using methods such as gravure coating, slot die coating, simultaneous multilayer die coating, imprinting, doctor blade coating, dip coating, bar coating or casting, etc., but it is not limited thereto. The anode slurry may further include a binder, and optionally may further include a conductive material, a thickener and the like.

In some embodiments, the anode may include an anode active material layer in the form of a lithium metal formed through a deposition/coating process.

Non-limiting examples of the solvent for the anode slurry may include water, pure water, deionized water, distilled water, ethanol, isopropanol, methanol, acetone, n-propanol, t-butanol, etc.

The above-described materials that can be used when manufacturing the cathode as the binder, conductive material and thickener may also be used for the anode.

In some embodiments, a styrene-butadiene rubber (SBR)-based binder, carboxymethyl cellulose (CMC), polyacrylic acid-based binder, poly(3,4-ethylenedioxythiophene) (PEDOT)-based binder, and the like may be used as an anode binder.

In one embodiment, the separation membrane 140 may be interposed between the cathode 100 and the anode 130. The separation membrane may prevent an electrical short-circuit between the cathode and the anode, and maintain flow of ions. According to an embodiment, the separation membrane may have a thickness of 10 $\mu$m to 20 $\mu$m, but in the present disclosure, it is not limited thereto.

The separation membrane may include a porous polymer film or a porous non-woven fabric. The porous polymer film may include a polyolefin polymer such as an ethylene polymer, a propylene polymer, an ethylene/butene copolymer, an ethylene/hexene copolymer, and an ethylene/methacrylate copolymer. The porous non-woven fabric may include glass fibers having a high melting point, polyethylene terephthalate fibers and the like.

The separation membrane may also include a ceramic material. For example, inorganic particles may be coated on the polymer film or dispersed in the polymer film to improve heat resistance.

The separation membrane may have a single-layer or multi-layer structure including the above-described polymer film and/or non-woven fabric.

According to exemplary embodiments, the cathode 100, the anode 130, and the separation membrane 140 may be repeatedly disposed to form the electrode assembly 150. In some embodiments, the electrode assembly 150 may have a jelly roll shape formed by winding, stacking, z-folding, or stack-folding the separation membrane 140.

In one embodiment, the electrode assembly 150 may have a jelly roll shape formed by winding the cathode 100, the anode 130, and the separation membrane 140 together. In one embodiment, the electrode assembly 150 may have a jelly roll shape in which the notched cathodes and anodes are arranged in spaces formed by repeatedly z-folding the separation membrane 140.

In one embodiment, the electrode assembly may be formed by repeatedly stacking the cathode, the anode, and the separation membrane, each being cut or separated into layers.

For example, electrode tabs (cathode tabs and anode tabs) may protrude from the cathode current collector 105 and the anode current collector 125, respectively, and may extend to one side of the case 160. The electrode tabs may be fused together with the one side of the case 160 to form electrode leads (a cathode lead 107 and an anode lead 127) that extend or are exposed to the outside of the case 160.

For example, a pouch-type case, a prismatic case, a cylindrical case, or a coin-type case may be used.

The electrode assembly 150 may be accommodated in the case 160 together with the above-described electrolyte to define the lithium secondary battery.

Hereinafter, the embodiments of the present disclosure will be further described with reference to specific experimental examples. The examples and comparative examples included in the experimental examples are merely illustrative of the present disclosure and do not limit the scope of the appended claims. It will be apparent to those skilled in the art that various changes and modifications to the examples can be made within the scope and technical spirit of the present disclosure, and it is also understood that such changes and modifications fall within the scope of the appended claims.

<**Preparative Example**>

**(1) Synthesis example of Additive I (dihydrolevoglucosenone)**

Sulfuric acid was added to a dispersion in which cellulose was dispersed in tetrahydrofuran (THF) and the mixture was reacted at 210°C to prepare levoglucosenone (yield: 51%). The levoglucosenone was subjected to a hydrogenation reaction in the presence of a Pd/C catalyst under a hydrogen atmosphere at 80 bar for 2 hours to prepare Additive I (yield:

99% or more) having a structure represented by Formula 2-1.

**(2) Synthesis example of Additive II ((1S,5R)-6,8-dioxaspiro[bicyclo[3.2.1]octane-4,2'-[1,3]dioxolane])**

Additive I (dihydrolevoglucosenone, 0.08 mol (10 g)) having the structure represented by Formula 2-1 above, 0.09 mol (5.8 g) of ethylene glycol, and 0.5 g (5 wt%) of an acidic catalyst (Amberlyst 36) were placed in a round-bottom flask, heated at 100°C for 5 hours, and then cooled to room temperature (25°C) The acidic catalyst was removed by vacuum filtration, and crystallization was carried out in EtOH to obtain 3 g of Additive II having a structure represented by Formula 2-2 below.

[Formula 2-2]

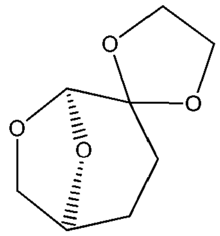

**(3) Synthesis example of Additive III ((1S,5R)-4',5'-dimethyl-6,8-dioxaspiro[bicyclo[3.2.1]octane-4,2'-[1,3]dioxolane])**

Additive III having a structure represented by Formula 2-4 below was obtained in the same manner as in the synthesis example of Additive II described above, except that 2,3-butanediol was used instead of ethylene glycol.

[Formula 2-4]

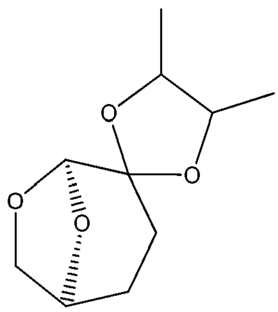

**<Examples and Comparative Examples>**

**Example 1**

**(1) Preparation of electrolyte**

**A** 1 M $LiPF_6$ solution (a mixed solvent of ethylene carbonate (EC)/ethyl methyl carbonate (EMC)/diethyl carbonate (DEC) in a volume ratio of 25:45:30) was prepared.

Based on the total weight of the electrolyte (100 wt%), 3 wt% of fluoroethylene carbonate (FEC), 1 wt% of lithium difluorophosphate (W3), 0.5 wt% of 1,3-propane sultone (PS), and 0.5 wt% of 1,2-ethylene sulfate (ESA) were added to the $LiPF_6$ solution, and 0.1 wt% of Additive I (Dihydrolevoglucosenone) having a structure represented by Formula 2-1 below was further added to prepare an electrolyte.

[Formula 2-1]

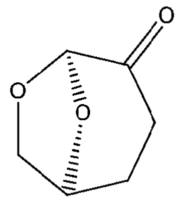

## (2) Manufacture of lithium secondary battery sample

A cathode slurry was prepared by mixing and dispersing $Li[Ni_{0.88}Co_{0.06}Mn_{0.06}]O_2$ as a cathode active material, carbon black as a conductive material, and polyvinylidene fluoride (PVdF) as a binder in a weight ratio of 92:5:3 in N-methyl-2-pyrrolidone (NMP).

The cathode slurry was uniformly applied to an aluminum foil (thickness: 15 $\mu$m) having a protrusion part (a cathode tab) on one side, excluding the protrusion part, and then dried and roll-pressed to fabricate a cathode.

An anode slurry was prepared by mixing an anode active material including artificial graphite and natural graphite in a weight ratio of 7:3, a styrene-butadiene rubber (SBR) as a binder, and a carboxymethyl cellulose (CMC) as a thickener in a weight ratio of 97:1:2 in distilled water.

The anode slurry was uniformly applied to a copper foil (thickness: 15 $\mu$m) having a protrusion part (an anode tab) on one side, excluding the protrusion part, and then dried and roll-pressed to fabricate an anode.

A polyethylene separation membrane (thickness: 20 $\mu$m) was interposed between the cathode and the anode to form an electrode assembly. Then, a cathode lead and an anode lead were welded and connected to the cathode tab and the anode tab, respectively.

The electrode assembly was placed in a pouch (case) so that some regions of the cathode lead and anode lead were exposed to the outside, and three sides of the pouch were sealed, leaving one side as an electrolyte injection region.

After injecting the electrolyte prepared in (1) above through the electrolyte injection region, the remaining side as the electrolyte injection region was also sealed, followed by impregnation for 12 hours to manufacture a lithium secondary battery sample.

## Example 2

An electrolyte and a lithium secondary battery sample were manufactured in the same manner as in Example 1, except that the amount of Additive I was changed from 0.1 wt% to 0.5 wt%.

## Example 3

An electrolyte and a lithium secondary battery sample were manufactured in the same manner as in Example 1, except that the amount of Additive I was changed from 0.1 wt% to 1 wt%.

## Example 4

An electrolyte and a lithium secondary battery sample were manufactured in the same manner as in Example 1, except that the amount of Additive I was changed from 0.1 wt% to 3 wt%.

## Example 5

An electrolyte and a lithium secondary battery sample were manufactured in the same manner as in Example 1, except that 0.5 wt% of Additive II ((1S,5R)-6,8-dioxaspiro[bicyclo[3.2.1]octane-4,2'-[1,3]dioxolane]) according to the synthesis example was used instead of Additive I.

## Example 6

An electrolyte and a lithium secondary battery sample were manufactured in the same manner as in Example 1, except that 0.5 wt% of Additive III ((1S,5R)-4',5'-dimethyl-6,8-dioxaspiro[bicyclo[3.2.1]octane-4,2'-[1,3]dioxolane]) according to the synthesis example was used instead of Additive I.

## Comparative Example 1

An electrolyte and a lithium secondary battery sample were manufactured in the same manner as in Example 1, except that Additive I was not used.

The electrolyte compositions of the examples and comparative examples are shown in Table 1 below.

[TABLE 1]

| | Lithium salt | Additive (wt %) | Auxiliary additive (wt %) | | | |
|---|---|---|---|---|---|---|
| | | | FEC | W3 | PS | ESA |
| Example 1 | $LiPF_6$ (1M) | Additive I (0.1) | 3 | 1 | 0.5 | 0.5 |
| Example 2 | $LiPF_6$ (1M) | Additive I (0.5) | 3 | 1 | 0.5 | 0.5 |
| Example 3 | $LiPF_6$ (1M) | Additive I (1) | 3 | 1 | 0.5 | 0.5 |
| Example 4 | $LiPF_6$ (1M) | Additive I (3) | 3 | 1 | 0.5 | 0.5 |
| Example 5 | $LiPF_6$ (1M) | Additive II (0.5) | 3 | 1 | 0.5 | 0.5 |
| Example 6 | $LiPF_6$ (1M) | Additive III (0.5) | 3 | 1 | 0.5 | 0.5 |
| Comparative Example 1 | $LiPF_6$ (1M) | - | 3 | 1 | 0.5 | 0.5 |

The components shown in Table 1 are as follows.

Additive I: Dihydrolevoglucosenone, prepared according to the synthesis example.

Additive II: ((1S,5R)-6,8-dioxaspiro[bicyclo[3.2.1]octane-4,2'-[1,3]dioxolane]), prepared according to the synthesis example.

Additive III: ((1S,5R)-4',5'-dimethyl-6,8-dioxaspiro[bicyclo[3.2.1]octane-4,2'-[1,3]dioxolane]), prepared according to the synthesis example.

FEC: Fluoroethylene carbonate.
W3: Lithium difluorophosphate ($LiPO_2F_2$).
PS: 1,3-propane sultone.
ESA: 1,2-Ethylene sulfate.

**<Experimental Example>**

## Experimental Example 1: Evaluation of initial capacity

The lithium secondary batteries of the examples and comparative examples were subjected to 0.5 C-rate CC/CV charging (4.2 V, 0.05 C cut-off) at 25°C, followed by 0.5 C-rate CC discharging (2.7 V cut-off) three times.

The discharge capacity value at the third cycle was defined as C1, the initial capacity of the lithium secondary batteries, and is shown in Table 2 below.

## Experimental Example 2: Evaluation of room-temperature cycle life

The lithium secondary batteries of the examples and comparative examples were charged at 1C to 4.2 V and discharged at 1C to 2.75 V at room temperature (25°C). This charge and discharge cycle was repeated 300 times, and the discharge capacity at the 300th cycle, C2, was measured.

The capacity retention was calculated using the following equation, and the results are shown in Table 2. If the room-temperature cycle life evaluation was not performed, it is indicated as "-" in Table 2.

$$\text{Capacity retention (\%)} = (C2 / C1) \times 100$$

**Experimental Example 3: Evaluation of capacity retention after high-temperature storage**

The lithium secondary batteries of the examples and comparative examples were charged at 1C to 4.2 V and discharged at 1C to 2.75 V at 25°C. The lithium secondary batteries were then recharged at 0.5C to 4.2 V and stored at a high temperature (60°C) for 8 weeks. After the high-temperature storage, the lithium secondary batteries were subjected to two cycles of charging at 1C to 4.2 V and discharging at 1C to 2.75 V, and the discharge capacity at the second cycle, C3, was measured.

The capacity retention after high-temperature storage was calculated using the following equation, and the results are shown in Table 2.

$$\text{Capacity retention rate (\%)} = (C3 / C1) \times 100$$

**Experimental Example 4: Evaluation of D-DCIR change rate after high-temperature storage**

Charging and discharging were performed on the secondary batteries of the examples and comparative examples at each C-rate for 10 seconds, while sequentially varying the C-rate to 0.2C, 0.5C, 1.0C, 1.5C, 2.0C, 2.5C and 3.0C at a 60% state of charge (SOC) point at 25°C. The terminal voltage points were then plotted to construct a linear equation, and the slope of the resulting line was adopted as the DCIR, which was designated as R1.

The secondary batteries of the examples and comparative examples were then charged at 0.5C to 4.2 V and stored at a high temperature (60°C) for 8 weeks. The D-DCIR of the lithium secondary batteries after high-temperature storage was measured using the same method, and the measured D-DCIR was designated as R2.

The D-DCIR change rate after high-temperature storage was calculated using the following equation, and the results are shown in Table 2.

$$\text{D-DCIR change rate (\%)} = (R2 / R1) \times 100$$

**Experimental Example 5: Evaluation of thickness change rate after high temperature storage**

The secondary batteries of the examples and comparative examples were charged at 0.5C to 4.2 V at 25°C, and the initial thickness (T1) of the batteries was measured using a plate thickness measuring device (Mitutoyo, 543-490B).

The secondary batteries of the examples and comparative examples were then stored at a high temperature (60°C) for 8 weeks, and the thickness (T2) of the batteries was measured using the same plate thickness measuring device (Mitutoyo, 543-490B).

The battery thickness change after high-temperature storage was calculated using the following equation, and the results are shown in Table 2.

$$\text{Battery thickness change (\%)} = (T2 / T1) \times 100$$

[TABLE 2]

| | | Example 1 | Example 2 | Example 3 | Example 4 | Example 5 | Example 6 | Comparative Example 1 |
|---|---|---|---|---|---|---|---|---|
| Initial characteristics | Capacity (mAh) | 1874 | 1864 | 1846 | 1734 | 1767 | 1769 | 1876 |
| Room-temperature (25°C) cycle life (300 cycles) | Capacity retention (%) | 89.7 | 93.5 | 85.1 | 78.6 | - | - | 90.8 |

(continued)

| | | Exampl e 1 | Exampl e 2 | Exampl e 3 | Exampl e 4 | Exampl e 5 | Exampl e 6 | Comparati ve Example 1 |
|---|---|---|---|---|---|---|---|---|
| After storage at 60°C (8 weeks) | Capacity retention (%) | 85.1 | 86.7 | 84.8 | 84.7 | 81.3 | 82.1 | 82.5 |
| | D-DCIR change rate (%) | 135 | 124.4 | 126.5 | 140.6 | 147.4 | 141.5 | 144.7 |
| | Thicknes s change rate (%) | 141 | 153.4 | 142.7 | 141.6 | 146.5 | 146.1 | 157.6 |

Referring to Tables 1 and 2, the lithium secondary batteries of the examples exhibited improved storage characteristics at a high temperature (60°C).

In Comparative Example 1, a lithium secondary battery that did not use an additive including a compound having a specific structure exhibited low capacity retention, a high D-DCIR change rate, and a high thickness change rate after high-temperature (60°C) storage.

The contents described above are merely examples of applying the principles of the present disclosure, and other configurations may be further included without departing from the scope of the present disclosure. The invention relates also to the following numbered aspects:

Aspect 1. An electrolyte for a lithium secondary battery comprising:

an additive comprising a compound having a structure represented by Formula 1 below;
an organic solvent; and
a lithium salt:

[Formula 1]

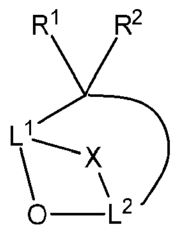

(in Formula 1, $R^1$ and $R^2$ form a carbonyl group together with the carbon atom to which they are bonded, or $R^1$ and $R^2$ are linked to the carbon atom to which they are bonded to form a 4- to 7-membered heterocycloalkyl group including at least one oxygen atom,
the heterocycloalkyl group is unsubstituted or substituted with at least one hydrogen atom replaced by an alkyl group having 1 to 4 carbon atoms,
$L^1$ and $L^2$ are each independently an alkylene group having 1 to 5 carbon atoms, and
X is an oxygen atom or an alkoxylene group having 1 to 3 carbon atoms).

Aspect 2. The electrolyte for a lithium secondary battery according to aspect 1, wherein $R^1$ and $R^2$ form a carbonyl group together with the carbon atom to which they are bonded, or $R^1$ and $R^2$ are linked to the carbon atom to which they are bonded to form a 5- or 6-membered heterocycloalkyl group including at least one oxygen atom,

the heterocycloalkyl group is unsubstituted or substituted with at least one hydrogen atom replaced by an alkyl group having 1 to 3 carbon atoms,
$L^1$ and $L^2$ are each independently an alkylene group having 1 to 4 carbon atoms, and
X is an oxygen atom, a methoxylene group, or an ethoxylene group.

Aspect 3. The electrolyte for a lithium secondary battery according to aspect 1 or aspect 2, wherein $R^1$ and $R^2$ form a carbonyl group together with the carbon atom to which they are bonded, or $R^1$ and $R^2$ are linked to the carbon atom to which they are bonded to form 1,3-dioxolane,

the 1,3-dioxolane is unsubstituted or substituted with at least one hydrogen atom replaced by a methyl group or an ethyl group,
$L^1$ and $L^2$ are each independently an alkylene group having 1 to 4 carbon atoms, and
X is an oxygen atom.

Aspect 4. The electrolyte for a lithium secondary battery according to any one of aspects 1 to 3, wherein the compound having the structure represented by Formula 1 comprises a compound having a structure represented by any one of Formula 2-1 to Formula 2-5 below:

[Formula 2-1]

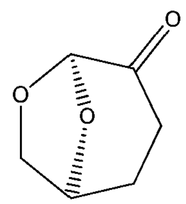

[Formula 2-2]

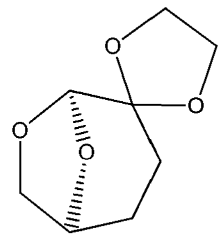

[Formula 2-3]

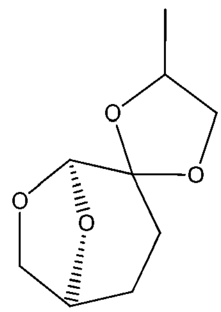

[Formula 2-4]

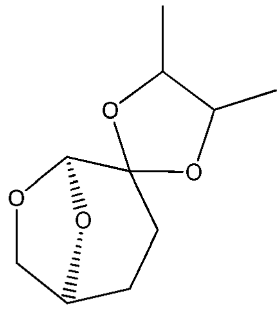

[Formula 2-5]

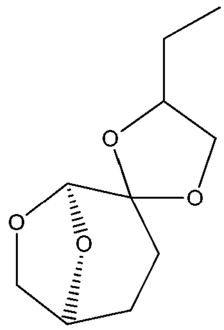

.

Aspect 5. The electrolyte for a lithium secondary battery according to any one of aspects 1 to 4, wherein the organic solvent comprises at least one selected from the group consisting of a carbonate organic solvent, an ester organic solvent, an ether organic solvent, a ketone organic solvent, and an aprotic organic solvent.
Aspect 6. The electrolyte for a lithium secondary battery according to any one of aspects 1 to 5, wherein the organic solvent comprises a cyclic carbonate solvent and a linear carbonate solvent.
Aspect 7. The electrolyte for a lithium secondary battery according to aspect 6, wherein the ratio of the volume of the cyclic carbonate solvent to the volume of the linear carbonate solvent in the organic solvent is 1/9 to 1.
Aspect 8. The electrolyte for a lithium secondary battery according to any one of aspects 1 to 7, wherein the content of the additive is 0.1% by weight to 10% by weight based on the total weight of the electrolyte.
Aspect 9. The electrolyte for a lithium secondary battery according to any one of aspects 1 to 8, wherein the content of the additive is 0.1% by weight to 3% by weight based on the total weight of the electrolyte.
Aspect 10. The electrolyte for a lithium secondary battery according to any one of aspects 1 to 9, wherein the lithium salt comprises at least one selected from the group consisting of $LiPF_6$, $LiClO_4$, $LiBF_4$, LiFSI, LiTFSI, LiBOB, LiFOB, LiDFOB, LiDFBP, LiTFOP, $LiPO_2F_2$, LiCl, LiBr, LiI, $LiB_{10}Cl_{10}$, $LiCF_3SO_3$, $LiCF_3CO_2$, $LiAsF_6$, $LiSbF_6$, $LiAlCl_4$, $CH_3SO_3Li$, $CF_3SO_3Li$, LiSCN, and $LiC(CF_3SO_2)_3$.
Aspect 11. The electrolyte for a lithium secondary battery according to any one of aspects 1 to 10, wherein the electrolyte further comprises at least one auxiliary additive selected from the group consisting of a fluorine-containing carbonate compound, a lithium phosphate compound, a sultone compound, and a sulfate compound.
Aspect 12. The electrolyte for a lithium secondary battery according to aspect 11, wherein the auxiliary additive comprises fluoroethylene carbonate (FEC), lithium difluorophosphate (LiDFP), 1,3-propane sultone (PS), and 1,2-ethylene sulfate (ESA).
Aspect 13. The electrolyte for a lithium secondary battery according to aspect 11 or aspect 12, wherein the content of the auxiliary additive is 0.01% by weight to 10% by weight based on the total weight of the electrolyte.
Aspect 14. The electrolyte for a lithium secondary battery according to any one of aspects 11 to 13, wherein the weight ratio of the content of the auxiliary additive to the content of the additive in the electrolyte is 0.1 to 15.
Aspect 15. A lithium secondary battery comprising:

an electrode assembly comprising a cathode and an anode that are repeatedly stacked; and
the electrolyte for a lithium secondary battery according to any one of aspects 1 to 14, which impregnates the electrode assembly.

[Description of Reference Numerals]

100: Cathode
105: Cathode current collector
110: Cathode active material layer
120: Anode active material layer
125: Anode current collector
130: Anode
140: Separation membrane
150: Electrode assembly
160: Case

## Claims

**1.** An electrolyte for a lithium secondary battery comprising:

an additive comprising a compound having a structure represented by Formula 1 below;
an organic solvent; and
a lithium salt:

[Formula 1]

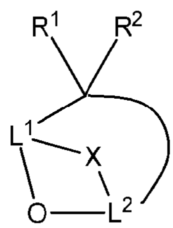

(in Formula 1, $R^1$ and $R^2$ form a carbonyl group together with the carbon atom to which they are bonded, or $R^1$ and $R^2$ are linked to the carbon atom to which they are bonded to form a 4- to 7-membered heterocycloalkyl group including at least one oxygen atom,
the heterocycloalkyl group is unsubstituted or substituted with at least one hydrogen atom replaced by an alkyl group having 1 to 4 carbon atoms,
$L^1$ and $L^2$ are each independently an alkylene group having 1 to 5 carbon atoms, and
X is an oxygen atom or an alkoxylene group having 1 to 3 carbon atoms).

**2.** The electrolyte for a lithium secondary battery according to claim 1, wherein $R^1$ and $R^2$ form a carbonyl group together with the carbon atom to which they are bonded, or $R^1$ and $R^2$ are linked to the carbon atom to which they are bonded to form a 5- or 6-membered heterocycloalkyl group including at least one oxygen atom,

the heterocycloalkyl group is unsubstituted or substituted with at least one hydrogen atom replaced by an alkyl group having 1 to 3 carbon atoms,
$L^1$ and $L^2$ are each independently an alkylene group having 1 to 4 carbon atoms, and
X is an oxygen atom, a methoxylene group, or an ethoxylene group.

**3.** The electrolyte for a lithium secondary battery according to claim 1 or claim 2, wherein $R^1$ and $R^2$ form a carbonyl group together with the carbon atom to which they are bonded, or $R^1$ and $R^2$ are linked to the carbon atom to which they are bonded to form 1,3-dioxolane,

the 1,3-dioxolane is unsubstituted or substituted with at least one hydrogen atom replaced by a methyl group or an ethyl group,
$L^1$ and $L^2$ are each independently an alkylene group having 1 to 4 carbon atoms, and

X is an oxygen atom.

4. The electrolyte for a lithium secondary battery according to any one of claims 1 to 3, wherein the compound having the structure represented by Formula 1 comprises a compound having a structure represented by any one of Formula 2-1 to Formula 2-5 below:

[Formula 2-1]

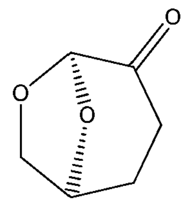

[Formula 2-2]

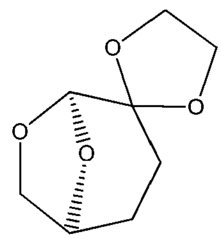

[Formula 2-3]

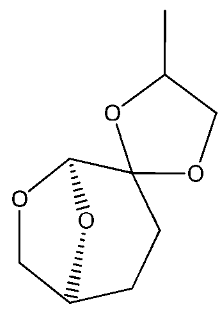

[Formula 2-4]

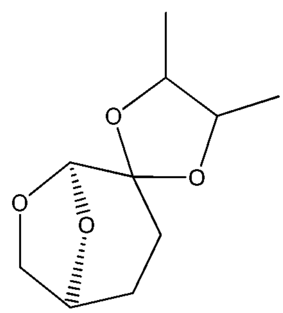

[Formula 2-5]

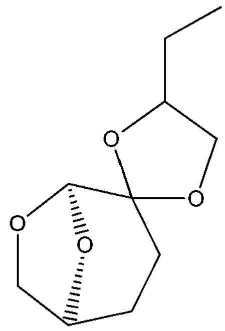

.

5. The electrolyte for a lithium secondary battery according to any one of claims 1 to 4, wherein the organic solvent comprises at least one selected from the group consisting of a carbonate organic solvent, an ester organic solvent, an ether organic solvent, a ketone organic solvent, and an aprotic organic solvent.

6. The electrolyte for a lithium secondary battery according to any one of claims 1 to 5, wherein the organic solvent comprises a cyclic carbonate solvent and a linear carbonate solvent.

7. The electrolyte for a lithium secondary battery according to claim 6, wherein the ratio of the volume of the cyclic carbonate solvent to the volume of the linear carbonate solvent in the organic solvent is 1/9 to 1.

8. The electrolyte for a lithium secondary battery according to any one of claims 1 to 7, wherein the content of the additive is 0.1% by weight to 10% by weight based on the total weight of the electrolyte.

9. The electrolyte for a lithium secondary battery according to any one of claims 1 to 8, wherein the content of the additive is 0.1% by weight to 3% by weight based on the total weight of the electrolyte.

10. The electrolyte for a lithium secondary battery according to any one of claims 1 to 9, wherein the lithium salt comprises at least one selected from the group consisting of $LiPF_6$, $LiClO_4$, $LiBF_4$, LiFSI, LiTFSI, LiBOB, LiFOB, LiDFOB, LiDFBP, LiTFOP, $LiPO_2F_2$, LiCl, LiBr, LiI, $LiB_{10}Cl_{10}$, $LiCF_3SO_3$, $LiCF_3CO_2$, $LiAsF_6$, $LiSbF_6$, $LiAlCl_4$, $CH_3SO_3Li$, $CF_3SO_3Li$, LiSCN, and $LiC(CF_3SO_2)_3$.

11. The electrolyte for a lithium secondary battery according to any one of claims 1 to 10, wherein the electrolyte further comprises at least one auxiliary additive selected from the group consisting of a fluorine-containing carbonate compound, a lithium phosphate compound, a sultone compound, and a sulfate compound.

12. The electrolyte for a lithium secondary battery according to claim 11, wherein the auxiliary additive comprises fluoroethylene carbonate (FEC), lithium difluorophosphate (LiDFP), 1,3-propane sultone (PS), and 1,2-ethylene sulfate (ESA).

13. The electrolyte for a lithium secondary battery according to claim 11 or claim 12, wherein the content of the auxiliary additive is 0.01% by weight to 10% by weight based on the total weight of the electrolyte.

14. The electrolyte for a lithium secondary battery according to any one of claims 11 to 13, wherein the weight ratio of the content of the auxiliary additive to the content of the additive in the electrolyte is 0.1 to 15.

15. A lithium secondary battery comprising:

an electrode assembly comprising a cathode and an anode that are repeatedly stacked; and
the electrolyte for a lithium secondary battery according to any one of claims 1 to 14, which impregnates the electrode assembly.

[FIG. 1]

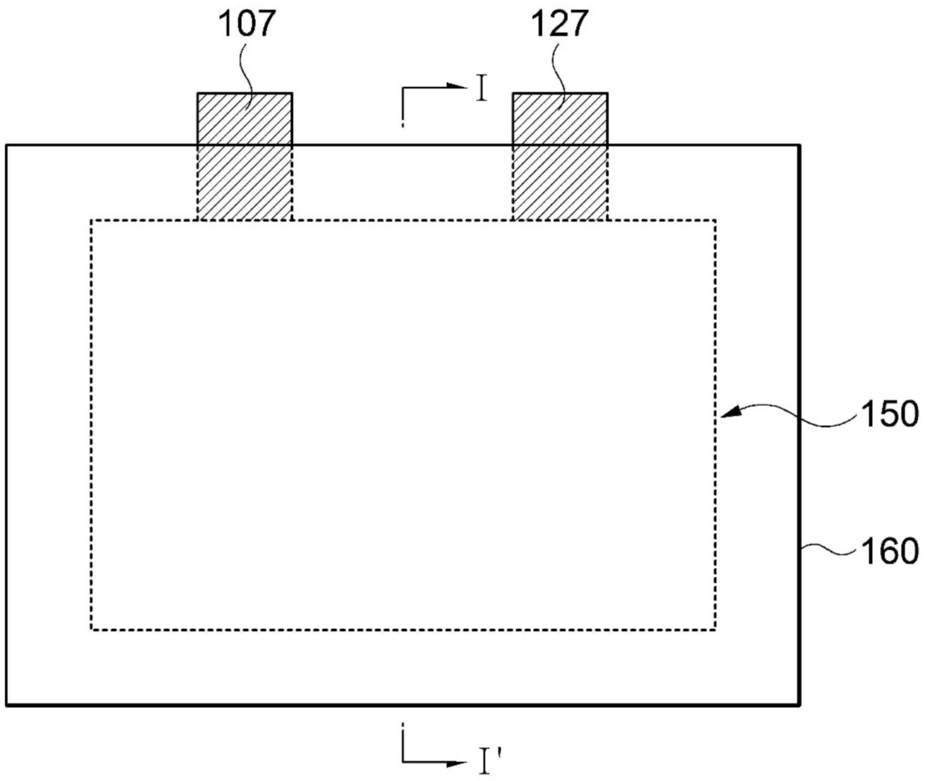


[FIG. 2]

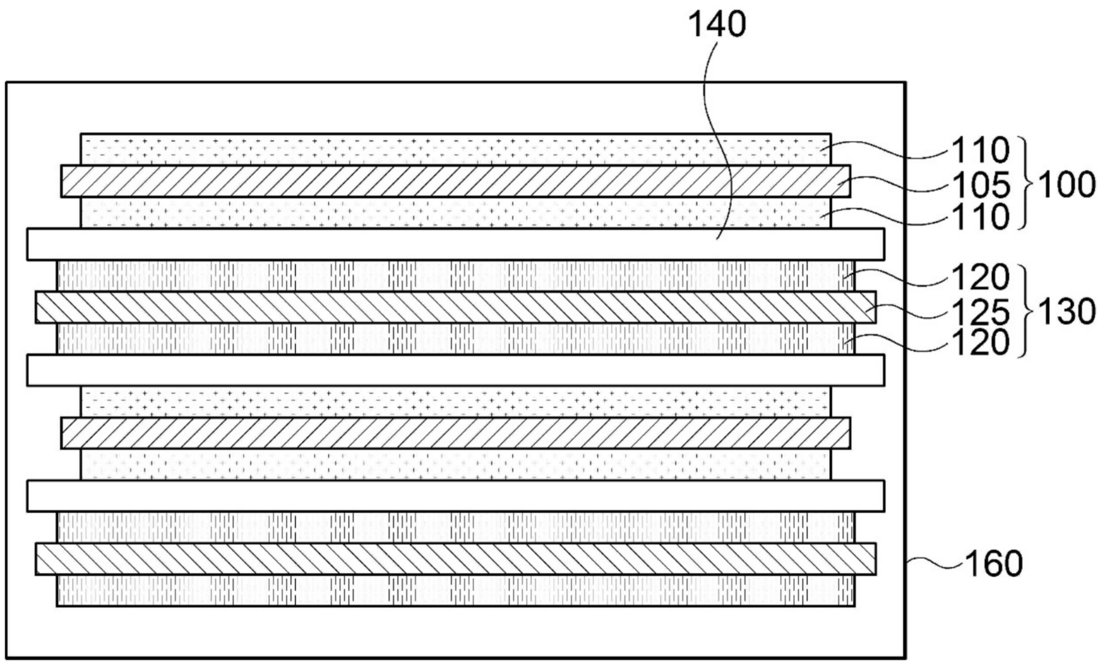

Europäisches Patentamt
European Patent Office
Office européen des brevets

# EUROPEAN SEARCH REPORT

Application Number
EP 25 20 9286

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2024/113062 A1 (MIRU SMART TECH CORP [CA]) 6 June 2024 (2024-06-06) * paragraphs [0002], [0057] - [0061], [0084] * ----- | 1-7, 10-15 | INV. H01M10/0525 H01M10/0567 |
| X | CN 117 543 102 A (BEIJING INSTITUTE TECH) 9 February 2024 (2024-02-09) * the whole document * ----- | 1,8-10 | |
| | | | TECHNICAL FIELDS SEARCHED (IPC) |
| | | | H01M |

The present search report has been drawn up for all claims

1

| Place of search | Date of completion of the search | Examiner |
|---|---|---|
| The Hague | 30 March 2026 | Suárez Ramón, C |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

## ANNEX TO THE EUROPEAN SEARCH REPORT ON EUROPEAN PATENT APPLICATION NO.

EP 25 20 9286

This annex lists the patent family members relating to the patent documents cited in the above-mentioned European search report. The members are as contained in the European Patent Office EDP file on
The European Patent Office is in no way liable for these particulars which are merely given for the purpose of information.

30-03-2026

| Patent document cited in search report | Publication date | Patent family member(s) | Publication date |
|---|---|---|---|
| WO 2024113062 A1 | 06-06-2024 | EP 4626966 A1 | 08-10-2025 |
| | | US 20260061727 A1 | 05-03-2026 |
| | | WO 2024113062 A1 | 06-06-2024 |
| CN 117543102 A | 09-02-2024 | NONE | |

EPO FORM P0459

For more details about this annex : see Official Journal of the European Patent Office, No. 12/82